# EUROPÄISCHE PATENTSCHRIFT

(11) **EP 1 410 960 B1**
(45) Veröffentlichungstag und Bekanntmachung des Hinweises auf die Patenterteilung: **13.07.2005**
(21) Anmeldenummer: 03022626.0
(22) Anmeldetag: 06.10.2003
(51) Int. Cl.: B60R 22/36

(54) **Gurtaufroller**
Belt retractor
Enrouleur de ceinture de sécurité

(30) Priorität: 15.10.2002 DE 20215835 U
(43) Veröffentlichungstag der Anmeldung: 21.04.2004
(73) Patentinhaber: TRW Automotive GmbH, 73553 Alfdorf (DE)
(72) Erfinder: Heilig, Alexander, 73550 Wissgoldingen (DE); Prokscha, Martin, 73527 Schwäbisch Gmünd (DE)
(74) Vertreter: Sties, Jochen, Dipl.-Ing.

(56) Entgegenhaltungen:
- WO-A-89/08570
- DE-A- 4 232 237
- DE-A- 19 648 084
- US-A- 4 522 350
- US-A- 5 033 691

## Beschreibung

Die Erfindung betrifft einen Gurtaufroller für einen Fahrzeug-Sicherheitsgurt nach dem Oberbegriff des Anspruchs 1. Ein derartiger Gurtaufroller ist aus der DE-A-42 32 237 bekannt.

Zur Blockierung der Gurtspule gegen eine Drehung in der Gurtband-Abwickelrichtung ist üblicherweise ein Sperrsystem vorhanden, das eine Sperrklinke, die am Rahmen abgestützt ist, und eine Sperrverzahnung aufweist, die mit der Gurtspule verbunden ist. Die Sperrklinke kann von einer Blockierautomatik fahrzeug- und/oder gurtbandsensitiv in die Sperrverzahnung eingesteuert werden, so daß die Gurtspule blockiert ist.

Um zu gewährleisten, daß die Sperrklinke auch bei hohen Belastungen sicher in der Sperrverzahnung eingerastet bleibt, wird üblicherweise durch die Geometrie der Sperrklinke und/oder der Sperrverzahnung sichergestellt, daß die von der Sperrverzahnung auf die Sperrklinke ausgeübten Kräfte ein Drehmoment auf die Sperrklinke ausüben, das die Sperrklinke zur Sperrverzahnung hin beaufschlagt. Daraus resultiert aber, daß die Sperrklinke aus der Sperrverzahnung nur dann wieder herausbewegt werden kann, wenn die Sperrverzahnung und damit die Gurtspule eine gewisse Rückdrehung in der Gurtband-Aufwickelrichtung ausführt. Andernfalls könnten die Reibungskräfte zwischen der Sperrklinke und der Sperrverzahnung nicht überwunden werden.

Die Aufgabe der Erfindung besteht darin, einen Gurtaufroller der eingangs genannten Art zu schaffen, bei dem aufgrund konstruktiv einfacher Maßnahmen einerseits ein sicheres Blockieren der Gurtspule und andererseits ein einfaches Entriegeln der Sperrverzahnung erreicht werden kann.

Diese Aufgabe wird erfindungsgemäß von einem Gurtaufroller mit den Merkmalen des Anspruchs 1 gelöst.

Die erste Sperrklinke ist auf diese Weise so ausgeführt und angeordnet, daß auf sie, wenn sie in die Sperrverzahnung eingesteuert ist, ein Drehmoment wirkt, das sie von der Sperrverzahnung weg beaufschlagt, oder das im Grenzfall auch zu Null werden kann. Die zweite Sperrklinke ist dagegen so ausgeführt und angeordnet, daß auf die sie, wenn sie in die Sperrverzahnung eingesteuert ist, ein Drehmoment wirkt, das sie in die Sperrverzahnung hinein beaufschlagt. Die Erfindung beruht auf dem Grundgedanken, eine Arbeitsteilung dahingehend vorzusehen, daß die erste Sperrklinke für eine Betriebs-Blockierung der Gurtspule und die zweite Sperrklinke für eine Crash-Blockierung der Gurtspule vorgesehen wird. Unter dem Begriff "Betriebs-Blockierung" wird dabei eine Blockierung verstanden, wie sie beim normalen Betrieb des Fahrzeugs vorkommt, beispielsweise beim scharfen Bremsen, bei Kurvenfahrt, etc. Unter dem Begnff "Crash-Blockierung" wird dagegen eine Blockierung verstanden, die bei einem Unfall des Fahrzeugs dazu dient, den Fahrzeuginsassen zurückzuhalten. Die Betriebs-Blockierung und die Crash-Blockierung unterscheiden sich also zum einen durch die wirkenden Kräfte und zum anderen durch die Häufigkeit des Auftretens: Die bei der Betriebs-Blockierung auftretenden Kräfte im Gurtband liegen maximal in der Größenordnung des Gewichts des Fahrzeuginsassen, während bei der Crash-Blockierung die Kraft im Gurtband ein Vielfaches des Gewichts des Fahrzeuginsassen beträgt. Die Betnebs-Blockierung kann mehrere tausend Mal während der Lebensdauer eines Gurtaufrollers auftreten, während die Crash-Blockierung üblicherweise nur ein einziges Mal vorkommt; anschließend sollte der Gurtaufroller durch ein neues Exemplar ersetzt werden. Die erste Sperrklinke, die für die Betriebs-Blockierung verwendet wird, zeichnet sich dadurch aus, daß sie leicht aus der Sperrverzahnung herausgezogen werden kann, da sie von dem auf sie einwirkenden Drehmoment sowieso aus der Sperrverzahnung herausgedrückt wird, beziehungsweise dadurch, dass das einwirkende Drehmoment in einem Grenzfall gleich Null ist, wenn der wirksame Hebelarm zwischen Schwenkpunkt der Klinke und ihrem Berührpunkt mit der Sperrverzahnung zu Null wird. Es ist also keine Rückdrehung der Gurtspule erforderlich, um die Sperrklinke auszusteuern und die Gurtspule wieder freizugeben. Allerdings kann die erste Sperrklinke nur bis zu einem gewissen Niveau belastet werden, da andernfalls das wirkende Drehmoment vom Blockiermechanismus, der die erste Sperrklinke in die Sperrverzahnung einsteuert, nicht aufgenommen werden kann und die Sperrklinke aus der Sperrverzahnung herausgedrückt würde. Oberhalb dieses Niveaus wird dann die zweite Sperrklinke wirksam. Da das auf die zweite Sperrklinke einwirkende Drehmoment diese in die Sperrverzahnung hinein beaufschlagt, verbessert sich der Halt der zweiten Sperrklinke in der Sperrverzahnung bei ansteigender Belastung von allein. Die Tatsache, daß die zweite Sperrklinke von der zweiten Sperrverzahnung nur nach einer Rückdrehung der Gurtspule gelöst werden kann, ist in der Praxis von untergeordneter Bedeutung.

Die erste Sperrklinke kann in einer erfindungsgemäßen Ausführungsform nachgiebig ausgebildet sein, so daß diese bei einem auf sie einwirkenden Drehmoment oberhalb des Niveaus der Betriebs-Blockierung ihre Sperrwirkung verliert, z.B. durch Verbiegen oder Abbrechen entlang einer Sollbruchstelle, wodurch die zweite Sperrklinke zum Eingriff in die Sperrverzahnung gelangt. Die Sperrklinken können dazu jeweils separat ausgebildet sein oder als ein Element in Form einer Tandemklinke, bei der die erste Sperrklinke als Zusatzschneide neben der zweiten Sperrklinke ausgebildet ist.

In einer weiteren erfindungsgemäßen Ausführungsform ist ein Gurtaufroller der eingangs genannten Art so ausgebildet, daß eine erste Sperrverzahnung und eine zweite Sperrverzahnung vorgesehen sind, die jeweils mit der Gurtspule verbunden sind Dies ermöglicht es, für die beiden Sperrklinken jeweils angepaßte Sperrverzahnungen zu verwenden.

Gemäß einer Ausführungsform der Erfindung ist vorgesehen, daß die Zähne der ersten Sperrverzahnung ohne Hinterschnitt ausgeführt sind und die Zähne der zweiten Sperrverzahnung mit Hinterschnitt ausgeführt sind. Die Sperrverzahnung ohne Hinterschnitt ist gegen die Sperrverzahnung mit Hinterschnitt über eine Feder angefedert und eilt ihr durch die Federwirkung voraus. Die Zähne der ersten Sperrklinke sind ebenfalls ohne Hinterschnitt ausgeführt, wohingegen die Zähne der zweiten Sperrklinke mit Hinterschnitt ausgeführt sind. Im Falle eines Sperrvorgangs bei einem Einschwenken der Sperrklinken kommt zunächst die Sperrklinke ohne Hinterschnitt in die Sperrverzahnung ohne Hinterschnitt zum Eingriff, um eine Betriebs-Blockierung vorzunehmen. In diesem Fall ist eine Entriegelung der Sperrklinke ohne eine Rückdrehung der Gurtspule möglich und kann bei kraftlos gemachter Feder nahezu ohne Kraftaufwand erfolgen. Nach Überschreitung einer durch den Gurt auf die Gurtspule wirkenden Grenzkraft, die sich aus den Federparametern ergibt, dreht sich die Sperrverzahnung mit Hinterschnitt gegen die Federkraft weiter, so daß die Sperrklinke mit Hinterschnitt in diese zum Eingriff kommt. Bei einem Eingriff der Sperrklinke mit Hinterschnitt in die Sperrverzahnung mit Hinterschnitt ergibt sich durch die Drehung der Gurtspule ein einziehendes Moment, welches eine vollständige Verschwenkung der Sperrklinke bewirkt und damit einen sicheren und schnellen Eingriff gewährleistet, der problemlos die hohen Kräfte übertragen kann, die bei einer Crash-Blockierung auftreten.

In einer weiteren Ausführungsform kann die Schwenkachse der ersten, für die Betriebs-Blockierung vorgesehenen Sperrklinke so angeordnet sein, daß der wirksame Hebelarm zwischen Schwenkpunkt und dem Berührpunkt zwischen Sperrklinke und Sperrverzahnung bei in die Sperrverzahnung eingesteuerter Sperrklinke vollständig oder wenigstens beinahe zu Null wird, wodurch das auf die Sperrklinke wirkende Drehmoment ebenfalls zu Null wird. Auf diese Weise wird die Klinke bei einer Blockierung der Gurtspule nicht aus der Sperrverzahnung herausgedrückt und kann vom Blockiermechanismus leichter in Blockierstellung gehalten werden.

Die erste Sperrklinke läßt sich kostengünstig aus Kunststoff oder einem anderen nachgiebigen Werkstoff herstellen, da sie nicht auf Bruchlast dimensioniert werden muß.

Weitere Merkmale und Vorteile der Erfindung ergeben sich aus der folgenden Beschreibung von Ausführungsformen, die in den beigefügten Zeichnungen schematisch dargestellt sind. In diesen zeigen:
- Figur 1 in einer schematischen Seitenansicht einen Gurtaufroller mit eingeschwenkten Sperrklinken in einer erfindungsgemäßen Ausführungsform mit einer Sperrverzahnung ohne Hinterschnitt und einer Sperrverzahnung mit Hinterschnitt;
- Figur 2 in einer schematischen Draufsicht die Sperrverzahnungen des in Figur 1 gezeigten erfindungsgemäßen Gurtaufrollers;
- Figur 3 in einer schematischen abgebrochenen Seitenansicht die Sperrverzahnung ohne Hinterschnitt mit eingeschwenkter Sperrklinke ohne Hinterschnitt des in Figur 1 gezeigten erfindungsgemäßen Gurtaufrollers;
- Figur 4 in einer schematischen abgebrochenen Seitenansicht die Sperrverzahnung mit Hinterschnitt mit eingeschwenkter Sperrklinke mit Hinterschnitt des in Figur 1 gezeigten erfindungsgemäßen Gurtaufrollers;
- Figur 5 in einer schematischen Draufsicht die Sperrklinken eines erfindungsgemäßen Gurtaufrollers in einer Ausführungsform, in der beide Sperrklinken separat ausgeführt sind.
- Figur 6 in einer schematischen Draufsicht die Sperrklinken eines erfindungsgemäßen Gurtaufrollers in einer weiteren Ausführungsform, in der die Sperrklinken als ein Element in Form einer Tandemklinke ausgebildet sind und die erste Sperrklinke als Zusatzschneide neben der zweiten Sperrklinke ausgebildet ist.

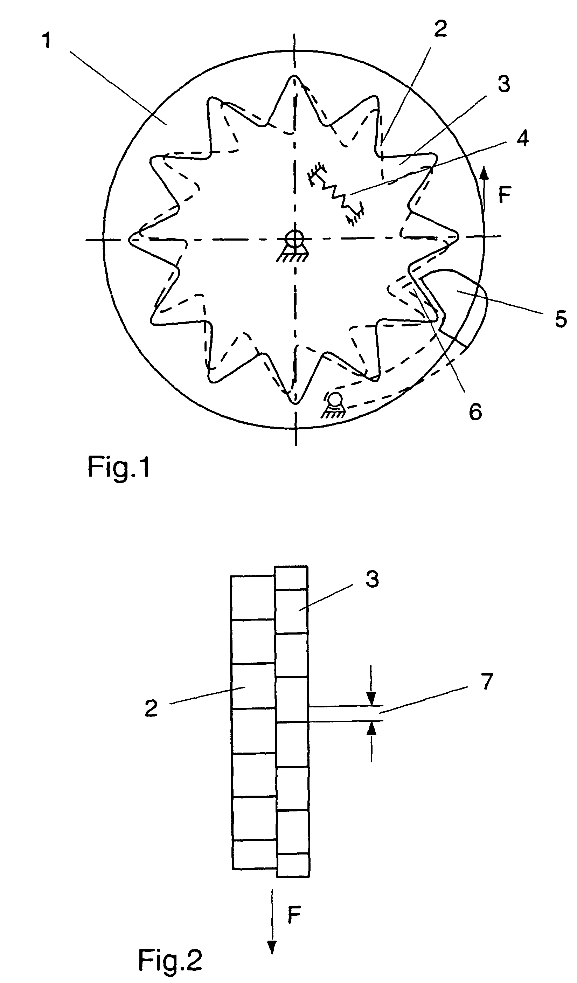

Figur 1 zeigt einen erfindungsgemäßen Gurtaufroller für einen Fahrzeug-Sicherheitsgurt. Es besteht im Wesentlichen aus einer Gurtspule 1, an der eine Gurtkraft F angreift und die mit einer Sperrverzahnung 2 mit Hinterschnitt fest verbunden ist. Über eine Feder 4 ist eine Sperrverzahnung 3 ohne Hinterschnitt gegen die Sperrverzahnung 2 angefedert. Durch die Federwirkung eilt die Sperrverzahnung 3 ohne Hinterschnitt der Sperrverzahnung 2 mit Hinterschnitt in Richtung der bei einem Sperrvorgang auf die Gurtspule wirkenden Kraft F voraus. In Figur 1 sind zwei schwenkbar gelagerte Sperrklinken 5, 6 in eingeschwenkter Position gezeigt, von denen die zweite Sperrklinke 6 einen Hinterschnitt aufweist und die erste Sperrklinke 5 nicht. Die Sperrklinken 5, 6 schwenken nach Auslösung des Sperrvorgangs zum Eingriff in die Sperrverzahnungen 2, 3 ein. Für eine Entriegelung des Sperrsystems werden die Sperrklinken 5, 6 wieder nach außen verschwenkt. Der Ein- und Ausschwenkvorgang kann in bekannter Form realisiert werden und ist nicht Gegenstand der Erfindung.

In Figur 2 ist die relative Lage der Sperrverzahnungen 2, 3 eines erfindungsgemäßen Gurtaufrollers zueinander gezeigt. Die Sperrverzahnung 3 ohne Hinterschnitt eilt der Sperrverzahnung 2 mit Hinterschnitt um einen Anfederweg 7 voraus, der bestimmt ist durch den Versatz der Sperrverzahnungen zueinander. Durch diese Vorauseilen gelangt bei einem Sperrvorgang, bei dem die Sperrklinken 5, 6 in die Sperrverzahnungen 2, 3 einschwenken, zuerst die Klinke 5 ohne Hinterschnitt zum Eingriff in die Sperrverzahnung 3 und blockiert diese. Übersteigt nun die an der Gurtspule angreifende Gurtkraft F einen bestimmten Grenzwert F _{*Grenz*}, so dreht sich die Gurtspule 1 mit der mit ihr fest verbundenen Sperrverzahnung 2 mit Hinterschnitt gegen die Wirkung der Federkraft in der Feder 4 weiter, so daß nun auch die Klinke 6 mit Hinterschnitt zum Eingriff in die Sperrverzahnung 2 mit Hinterschnitt kommen kann

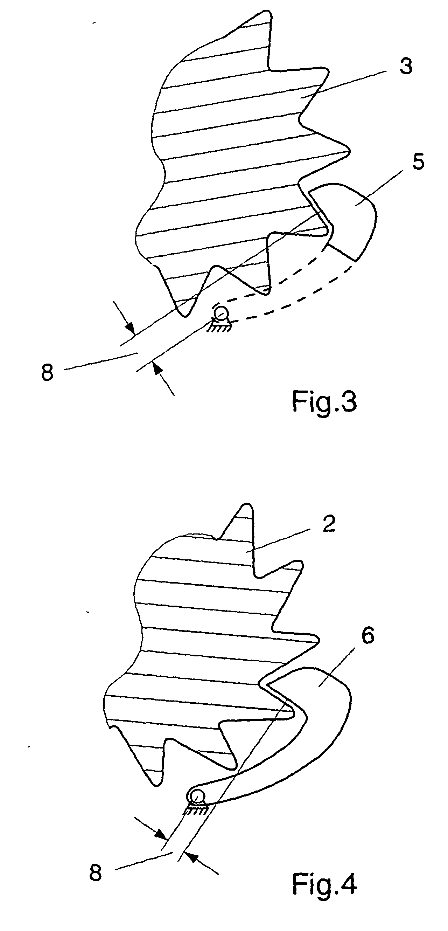

Figur 3 zeigt die Sperrklinke 5 ohne Hinterschnitt eines erfindungsgemäßen Gurtaufrollers im Eingriff in die Sperrverzahnung 3 ohne Hinterschnitt. Übersteigt nach Auslösung eines Sperrvorgangs und dem Einschwenken der Sperrklinke 5 die Gurtkraft F nicht den Grenzwert F _{*Grenz*} und kommt es somit nicht zu einem Eingriff der Sperrklinke 6 mit Hinterschnitt in die Sperrverzahnung 2, so ist eine Entriegelung des Systems, d. h. ein Ausschwenken der Sperrklinke 5 ohne eine Rückdrehung der Gurtspule 1 möglich, da über den Hebelarm 8 kein einziehendes Moment auf die Sperrklinke 5 wirkt. Wenn nun die Feder 4 kraftlos gemacht wird, so ist das Ausschwenken der Klinke 5 auch nahezu kraftlos möglich. Der Entnegelungsvorgang läßt sich auf diese Art stark vereinfachen.

Figur 4 zeigt die Sperrklinke 6 mit Hinterschnitt eines erfindungsgemäßen Gurtaufrollers im Eingriff in die Sperrverzahnung 2 mit Hinterschnitt. In diesem Fall wirkt durch die Gurtkraft F, die nun F _{*Grenz*} übersteigt, ein einziehendes Moment über den Hebelarm 8 auf die Sperrklinke 6 mit Hinterschnitt, wodurch ein schnelleres und vollständiges Einziehen der Klinke bewirkt wird und die Bruchlast im Crashfall sicher übertragen werden kann.

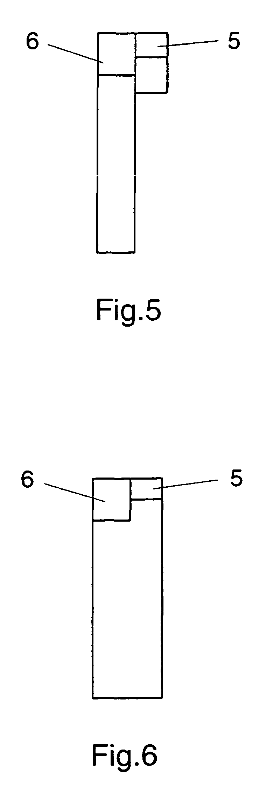

In der Figur 5 sind die erste Sperrklinke 5 und die zweite Sperrklinke 6 eines erfindungsgemäßen Gurtaufrollers gemäß einer ersten Ausführungsform als zwei separate Klinken gezeigt. Diese Ausführungsform hat den Vorteil, daß die erste Sperrklinke 5 kostengünstig aus Kunststoff hergestellt werden kann, da sie nicht auf Bruchlast dimensioniert werden muß.

Figur 6 zeigt die erste Sperrklmke 5 und die zweite Sperrklinke 6 eines erfindungsgemäßen Gurtaufrollers gemäß einer weiteren Ausführungsform. Hier bilden beide Klinken 5, 6 eine Tandemklinke, wobei die erste Sperrklinke 5 als Zusatzschneide neben der zweiten Sperrklinke 6 ausgebildet ist.

## Patentansprüche

1. Gurtaufroller für einen Fahrzeug-Sicherheitsgurt, mit einem Rahmen und einer Gurtspule (1), die im Rahmen drehbar gelagert ist, und wenigstens einer Sperrverzahnung (2, 3), die mit der Gurtspule verbunden ist, wobei eine erste Sperrklinke (5) vorgesehen ist, die am Rahmen abgestützt ist und in die Sperrverzahnung (3) eingreifen kann, wobei die erste Sperrklinke (5) um einen Schwenkpunkt schwenkbar ist, der so angeordnet ist, daß bei in die Sperrverzahnung (3) eingesteuerter Sperrklinke (5) eine virtuelle Linie, die durch den Berührpunkt zwischen der Sperrklinke (5) und der Sperrverzahnung (3) geht und senkrecht auf der Zahnfläche im Berührpunkt steht, zwischen dem Schwenkpunkt und der Drehachse der Gurtspule (1) verläuft, **dadurch gekennzeichnet, daß** eine zweite Sperrklinke (6) vorgesehen ist, die am Rahmen abgestützt ist und in die Sperrverzahnung (2) eingreifen kann, wobei die zweite Sperrklinke (6) um einen Schwenkpunkt schwenkbar ist, der so angeordnet ist, daß bei in die Sperrverzahnung (2) eingesteuerter Sperrklinke (6) eine virtuelle Linie, die durch den Berührpunkt zwischen der Sperrklinke (6) und der Sperrverzahnung (2) geht und senkrecht auf der Zahnfläche im Berührpunkt steht, auf der von der Drehachse der Gurtspule (1) abgewandten Seite des Schwenkpunktes verläuft.

2. Gurtaufroller nach Anspruch 1, **dadurch gekennzeichnet, daß** bei einem Einsteuervorgang die erste eingesteuerte Sperrklinke (5) in die Sperrverzahnung (2, 3) eingreift und die zweite eingesteuerte Sperrklinke (6) in eine von der Zahnfläche der Sperrverzahnung (2, 3) beabstandete, nicht sperrende Position gelangt.

3. Gurtaufroller nach Anspruch 2, **dadurch gekennzeichnet, daß** die erste Sperrklinke (5) nachgiebig ausgebildet ist.

4. Gurtaufroller nach Anspruch 3, **dadurch gekennzeichnet, daß** die erste Sperrklinke (5) als Zusatzteil auf der zweiten (6) Sperrklinke ausgebildet ist, das mit der zweiten Sperrklinke (6) durch eine Sollbruchstelle verbunden ist.

5. Gurtaufroller nach einem der vorhergehenden Ansprüche, **dadurch gekennzeichnet, daß** eine erste Sperrverzahnung (3) und eine zweite Sperrverzahnung (2) vorgesehen sind, die jeweils mit der Gurtspule verbunden sind, wobei die erste Sperrklinke (5) in die erste Sperrverzahnung (3) und die zweite Sperrklinke (6) in die zweite Sperrverzahnung (2) eingreifen kann.

6. Gurtaufroller nach Anspruch 5, **dadurch gekennzeichnet, daß** die Zähne der ersten Sperrverzahnung (3) ohne Hinterschnitt ausgeführt sind und die Zähne der zweiten Sperrverzahnung (2) mit Hinterschnitt ausgeführt sind.

7. Gurtaufroller nach einem der vorhergehenden Ansprüche, **dadurch gekennzeichnet, daß** die Zähne der ersten Sperrklinke (5) ohne Hinterschnitt ausgeführt sind und die Zähne der zweiten Sperrklinke (6) mit Hinterschnitt ausgeführt sind.

8. Gurtaufroller nach Anspruch 5, 6 oder 7, **dadurch gekennzeichnet, daß** die erste Sperrverzahnung (3) auf einer Sperrscheibe angeordnet ist, die relativ zur zweiten Sperrverzahnung (2) drehbar ist, und daß eine Feder (4) vorgesehen ist, welche die Sperrscheibe relativ zur zweiten Sperrverzahnung (2) in eine Ausgangsstellung beaufschlagt, in der sie der zweiten Sperrverzahnung (2) vorausläuft.

9. Gurtaufroller nach einem der vorhergehenden Ansprüche, **dadurch gekennzeichnet, daß** bei in eine Sperrverzahnung (3) eingesteuerter Sperrklinke (5) eine virtuelle Linie, die durch den Berührpunkt zwischen der Sperrklinke (5) und der Sperrverzahnung (3) geht und senkrecht auf der Zahnfläche im Berührpunkt steht, durch den Schwenkpunkt der Sperrklinke (5) verläuft.

10. Gurtaufroller nach einem der vorhergehenden Ansprüche, **dadurch gekennzeichnet, daß** die erste Sperrklinke aus einem nachgiebigen Werkstoff hergestellt ist.

## Claims

1. A belt retractor for a vehicle safety belt, comprising a frame and a belt spool (1) which is rotatably mounted in the frame, and at least one locking toothing (2, 3) which is connected with the belt spool, a first locking pawl (5) being provided which is supported on the frame and can engage into the locking toothing (3), the first locking pawl (5) being adapted to swing about a pivotal point which is arranged such that with the locking pawl (5) engaged into the locking toothing (3), a virtual line which passes through the point of contact between the locking pawl (5) and the locking toothing (3) and stands perpendicularly on the tooth face in the point of contact, runs between the pivotal point and the rotation axis of the belt spool (1), **characterized in that** a second locking pawl (6) is provided which is supported on the frame and can engage into the locking toothing (2), the second locking pawl (6) being adapted to swing about a pivotal point which is arranged such that with the locking pawl (6) engaged into the locking toothing (2), a virtual line which passes through the point of contact between the locking pawl (6) and the locking toothing (2) and stands perpendicularly on the tooth face in the point of contact, runs on the side of the pivotal point facing away from the rotation axis of the belt spool (1).

2. The belt retractor according to Claim 1, **characterized in that** in a process of engagement, the first locking pawl (5) when engaged engages into the locking toothing (2, 3) and the second locking pawl (6) when engaged reaches a non-locking position spaced apart from the tooth face of the locking toothing (2, 3).

3. The belt retractor according to Claim 2, **characterized in that** the first locking pawl (5) is designed so as to be flexible.

4. The belt retractor according to Claim 3, **characterized in that** the first locking pawl (5) is constructed as an additional part on the second (6) locking pawl, which is connected with the second locking pawl (6) by a predetermined breaking point.

5. The belt retractor according to any of the preceding claims, **characterized in that** a first locking toothing (3) and a second locking toothing (2) are provided, which are each connected with the belt spool, the first locking pawl (5) being able to engage into the first locking toothing (3) and the second locking pawl (6) being able to engage into the second locking toothing (2).

6. The belt retractor according to Claim 5, **characterized in that** the teeth of the first locking toothing (3) are configured without an undercut and the teeth of the second locking toothing (2) are configured with an undercut.

7. The belt retractor according to any of the preceding claims, **characterized in that** the teeth of the first locking pawl (5) are configured without an undercut and the teeth of the second locking pawl (6) are configured with an undercut.

8. The belt retractor according to Claim 5, 6 or 7, **characterized in that** the first locking toothing (3) is arranged on a locking disk which is rotatable relative to the second locking toothing (2), and that a spring (4) is provided which urges the locking disk relative to the second locking toothing (2) into an initial position in which it precedes the second locking toothing (2).

9. The belt retractor according to any of the preceding claims, **characterized in that** with the locking pawl (5) engaged into a locking toothing (3), a virtual line which passes through the point of contact between the locking pawl (5) and the locking toothing (3) and stands perpendicularly on the tooth face in the point of contact, runs through the pivotal point of the locking pawl (5).

10. The belt retractor according to any of the preceding claims, **characterized in that** the first locking pawl is produced from a flexible material.

## Revendications

1. Enrouleur de ceinture pour une ceinture de sécurité de véhicule, comportant un cadre et une bobine de cemture (1) qui est montée rotative dans le cadre, et au moins une denture de blocage (2, 3) qui est reliée à la bobine de ceinture, un premier cliquet de blocage (5) étant prévu, lequel prend appui sur le cadre et peut s'engager dans la denture de blocage, le premier cliquet de blocage (5) pouvant pivoter autour d'un point de pivotement qui est agencé de telle sorte que lorsque le cliquet de blocage est engagé dans la denture de blocage (3), une ligne virtuelle qui passe à travers le point de contact entre le cliquet de blocage (5) et la denture de blocage (3) et qui est perpendiculaire à la surface de dent dans le point de contact, s'étend entre le point de pivotement et l'axe de rotation de la bobme de ceinture (1), **caractérisé en ce qu'**il est prévu un deuxième cliquet de blocage (6) qui prend appui sur le cadre et qui peut s'engager dans la denture de blocage (2), le deuxième cliquet de blocage (5) pouvant pivoter autour d'un point de pivotement qui est agencé de telle sorte que lorsque le cliquet de blocage est engagé dans la denture de blocage (2), une ligne virtuelle qui passe à travers le point de contact entre le cliquet de blocage (6) et la denture de blocage (2) et qui est perpendiculaire à la surface de dent dans le point de contact, s'étend sur la face du point de pivotement qui est détournée de l'axe de rotation de la bobine de ceinture (1).

2. Enrouleur de ceinture selon la revendication 1, **caractérisé en ce qu'**en cas d'engagement, le premier liquet de blocage (5) engagé s'engage dans la denture de blocage (2, 3) et le deuxième cliquet de blocage (6) parvient dans une position non bloquante à distance de la surface de dent de la denture de blocage (2, 3).

3. Enrouleur de ceinture selon la revendication 2, **caractérisé en ce que** le premier cliquet de blocage (5) est réalisé souple.

4. Enrouleur de ceinture selon la revendication 3, **caractérisé en ce que** le premier cliquet de blocage (5) est réalisé en tant que partie additionnelle sur le deuxième cliquet de blocage (6), qui est relié au deuxième cliquet de blocage (6) par un point de rupture.

5. Enrouleur de ceinture selon l'une des revendications précédentes, **caractérisé en ce qu'**il est prévu une première denture de blocage (3) et une deuxième denture de blocage (2) qui sont chacune reliées à la bobine de ceinture, le premier cliquet de blocage (5) pouvant s'engager dans la première denture de blocage (3), et le deuxième cliquet de blocage (6) pouvant s'engager dans la deuxième denture de blocage (2).

6. Enrouleur de ceinture selon la revendication 5, **caractérisé en ce que** les dents de la première denture de blocage (3) sont réalisées sans contre-dépouille et les dents de la deuxième denture de blocage (2) sont réalisées avec contre-dépouille.

7. Enrouleur de ceinture selon l'une des revendications précédentes, **caractérisé en ce que** les dents du premier cliquet de blocage (5) sont réalisées sans contre-dépouille et les dents du deuxième cliquet de blocage (6) sont réalisées avec contre-dépouille.

8. Enrouleur de ceinture selon la revendication 5, 6 ou 7, **caractérisé en ce que** la première denture de blocage (3) est agencée sur un disque de blocage qui est rotatif par rapport à la deuxième denture de blocage (2), et **en ce qu'**il est prévu un ressort (4) qui sollicite le disque de blocage par rapport à la denture de blocage (2) jusque dans une position initiale dans laquelle il précède la deuxième denture de blocage (2).

9. Enrouleur de ceinture selon l'une des revendications précédentes, **caractérisé en ce que** dans le cas où le cliquet de blocage (5) est engagé dans une denture de blocage (3), une ligne virtuelle qui passe à travers le point de contact entre le cliquet de blocage (5) et la denture de blocage (3) et qui est perpendiculaire à la surface de dent dans le point de contact, s'étend à travers le point de pivotement du cliquet de blocage (5).

10. Enrouleur selon l'une des revendications précédentes, **caractérisé en ce que** le premier cliquet de blocage est réalisé en un matériau souple.
